# EUROPÄISCHE PATENTANMELDUNG

(11) **EP 4 316 896 A1**
(43) Veröffentlichungstag der Anmeldung: **07.02.2024**
(21) Anmeldenummer: 23180841.1
(22) Anmeldetag: 22.06.2023
(51) Int. Cl.: B60L 8/00, F03D 9/25, B60L 5/06, B60L 5/18, B60L 5/20, B60L 5/22, B60K 16/00, B60M 3/06, F03D 3/00, F03D 3/02, F03D 5/04, F03D 9/32

(54) **FAHRZEUG MIT WENIGSTENS EINEM ELEKTROANTRIEB UND WENIGSTENS EINEM STROMABNEHMER**

(30) Priorität: 03.08.2022 DE 202022104413 U; 27.09.2022 DE 102022124820
(71) Anmelder: Myftari, Erion, 42275 Wuppertal (DE)
(72) Erfinder: Myftari, Erion, 42275 Wuppertal (DE)
(74) Vertreter: Buse, Mentzel, Ludewig Patentanwaltskanzlei

(57) **Zusammenfassung**

Die Erfindung beschreibt ein Fahrzeug (10) mit wenigstens einem Elektroantrieb und wenigstens einem Stromabnehmer (11) um elektrische Energie von einem elektrischen Leiter (20) abzunehmen. Das Fahrzeug (10) ist dabei mit einem oder mehreren Photovoltaik-Elementen (30) ausgestattet, über die elektrische Energie erzeugbar ist. Die Erfindung schlägt nun vor, dass das Fahrzeug (10) weiterhin über wenigstens eine Windkraftanlage verfügt, über die ebenfalls elektrische Energie erzeugbar ist wobei der von den Photovoltaik-Elementen (30) und/oder der Windkraftanlage erzeugte Strom direkt ohne Zwischenspeicherung in ein Stromnetz eingespeist wird. Weiterhin wird entweder ein zusätzliches den elektrischen Strom leitendes Glied (21) dazu verwendet, die elektrische Energie in das Stromnetz einzuspeisen oder der Stromabnehmer (11) dazu verwendet, die elektrische Energie in den elektrischen Leiter (20) einzuspeisen

## Beschreibung

Die Erfindung betrifft ein Fahrzeug mit wenigstens einem Elektroantrieb und wenigstens einem Stromabnehmer der im Oberbegriff von Anspruch 1 angegebenen Art. Solche Fahrzeuge finden überwiegend im öffentlichen Personenverkehr Verwendung, beispielsweise im Bereich von Straßenbahnen, Stadtbahnen, Elektrobussen, Eisenbahnen usw. Üblicherweise wird über den Stromabnehmer elektrische Energie von einem Leiter abgenommen und dem Elektroantrieb zugeführt, um das Fahrzeug zu betreiben.

Die DE 10 2009 029 790 A1 beschreibt ein Fahrzeug mit Photovoltaikstrukturen, die an einer Außenfläche des Fahrzeugs angeordnet sind, um elektrische Energie zu gewinnen die im Fahrzeug in einer Batterie gespeichert wird. Diese Energie steht dann dem Fahrzeug wieder zur Verfügung.

In der DE 10 2019 000 515 A1 wird ein System beschrieben, um Windenergie auf einem Fahrzeug nutzbar zu machen. Als Fahrzeuge können dabei Autos, Straßenbahnen, Züge, Schiffe oder sonstiges dienen. Die gewonnene Energie kann entweder von dem Fahrzeug selbst genutzt werden oder auch anderen Zwecken zugeführt werden. Hierzu ist jedoch nur beschrieben, dass die Energie in einer Batterie eingespeichert und über eine Steckdose dem Stromnetz zugeführt wird. Wie dies im Detail geschehen könnte, lässt das Gebrauchsmuster jedoch offen.

Die DE 20 2008 015 733 U1 beschreibt ein Windrad mit einer horizontalen Welle, welches auf einem Dach eines Fahrzeugs montierbar ist und durch den Fahrwind Energie erzeugt. Was mit dieser Art der Energie danach geschieht, wird hier jedoch nicht weiter beschrieben.

In der US 2019/0193711 A1 ist ein Fahrzeugkontrollsystem beschrieben. Das dort beschriebene Fahrzeug weist einen Elektroantrieb und mindestens eine Photovoltaikanlage sowie eine Windkraftanlage auf um Strom zu erzeugen. Wird von dem Fahrzeug mehr Energie erzeugt als das Fahrzeug benötigt, so kann überschüssige Energie an eine externe Stelle abgegeben werden. Die Rückeinspeisung an das Stromnetz, welches das Fahrzeug ursprünglich mit Energie versorgt, ist nicht vorgesehen.

In der EP 1 918 153 B1 ist ein schienengebundenes Fahrzeug beschrieben, welches zu Energiegewinnung mit Solarkollektoren ausgestattet ist. Überschüssige von den Solarkollektoren erzeuge Energie kann in ein Stromnetz eingespeist werden, beispielsweise in das allgemeine Stromnetz für Endverbraucher oder auch in das Stromnetz für die Schienenfahrzeuge. Dass Windkraftanlage auch eine nachhaltige Energiequelle darstellt ist zwar erwähnt, wird aber nicht näher ausgeführt. Insbesondere wird nicht beschrieben, dass das Fahrzeug zwei unterschiedliche Arten von Energiequellen verwendet.

Aufgabe der Erfindung ist es ein Fahrzeug bereit zu stellen, welches mehrere unterschiedliche regenerative Energiequellen gemeinsam nutzt, um elektrische Energie zu erzeugen und diese Energie direkt in ein Stromnetz einzuspeisen. Diese Aufgabe wird durch die kennzeichnenden Merkmale von Anspruch 1 gelöst, denen folgende besondere Bedeutung zukommt.

Neben einem oder mehreren Photovoltaik-Elementen verfügt das Fahrzeug noch über wenigstens eine Windkraftanlage. Über beide Elemente wird elektrische Energie erzeugt. Diese wird dann an direkt ohne Zwischenspeicherung in ein Stromnetz eingespeist und steht dort verschiedenen elektrischen Verbrauchern zur Verfügung. Hierdurch werden Verluste durch eine Zwischenspeicherung in einer Batterie im Fahrzeug und anschließende Einspeisung in ein Stromnetz vermieden. Wird die erzeugte elektrische Energie direkt in den elektrischen Leiter eingespeist, so kann dies in einem ersten Ausführungsbeispiel direkt über den vorhandenen Stromabnehmer geschehen. Es kann jedoch gemäß einem zweiten Ausführungsbeispiel auch ein weiteres den elektrischen Strom leitendes Glied vorgesehen sein, um die erzeugte elektrische Energie in den elektrischen Leiter oder in ein anderes Stromnetz einzuspeisen.

Bevorzugterweise sind das bzw. die Photovoltaik-Elemente auf dem Dach des Fahrzeugs angeordnet. So kann die meiste Sonnenenergie von den Photovoltaik-Elementen aufgenommen werden.

Auch die wenigstens eine Windkraftanlage kann auf dem Dach des Fahrzeugs angeordnet sein. So kann sie den Fahrtwind oder auch anderen Wind gut aufnehmen und stört nicht beim Betrieb des Fahrzeugs, indem sie dieses dadurch verbreitert.

Besonders bevorzugt bilden die Photovoltaik-Elemente eine Abdeckung über der bzw. den Windkraftanalgen. Alternativ können die Photovoltaik-Elemente auch auf einer entsprechenden Abdeckung angeordnet sein. Hierdurch sind die Windkraftanlagen den Photovoltaik-Elementen nicht im Weg oder werfen Schatten und die ganze Fläche des Daches kann mit Photovoltaik-Elementen ausgestattet werden. Gleichzeitig wird der Wind für die Windkraftanlagen kanalisiert und kann diese gut antreiben. Besonders vorteilhaft ist es, wenn als Photovoltaik-Elemente flexible Solarpaneele Verwendung finden. Diese sind leichter und daher besonders gut für den Einsatz auf einem Fahrzeug geeignet.

Die Windkraftanlagen können jeweils über eine vertikale oder eine horizontale Rotationsachse verfügen. Dies kann je nach genauem Anwendungsgebiet angepasst werden.

Vorteilhafterweise sind mehrere Windkraftanlagen vorgesehen, wobei die von diesen erzeugte Energie auf einem Windhauptleiter gesammelt wird. Die so gesammelte Energie kann dann unter Zwischenschaltung des Windhauptleiters in das Stromnetz eingespeist werden.

Werden mehrere Photovoltaik-Elemente verwendet, können diese einfach über Verbinder miteinander verbunden werden. Hier können Steckverbinder, aber auch Clipsverbindungen oder andere lösbare oder unlösbare Verbindungen vorgesehen sein. Hierdurch bilden die Photovoltaik-Elemente eine durchgängige Fläche.

Auch kann auch ein Solarhauptleiter vorgesehen sein um die von mehreren Photovoltaik-Elementen gesammelte Energie zu bündeln und dann dem Stromnetz zuzuführen.

Damit bei Schneefall oder im Falle von Eis die Photovoltaik-Elemente noch genügend Energie aufnehmen können, können diese beheizbar sein. Hierdurch werden Schnee oder Eis getaut. Besonders vorteilhaft ist dabei eine Rohrbegleitheizung.

In einem besonders bevorzugten Ausführungsbeispiel dient als Stromnetz der elektrische Leiter, von dem das Fahrzeug seine Energie bezieht. So wird ein Teil der von dem Fahrzeug verbrauchten Energie direkt zurück in den elektrischen Leiter gespeist. Alternativ kann aber auch ein separater Leiter vorgesehen sein, in den die von den Photovoltaik-Elementen und/oder den Windkraftanlagen erzeugte Energie eingespeist wird.

Bevor die elektrische Energie in das Stromnetz eingespeist wird, kann am Fahrzeug noch ein Gleichrichter vorgesehen sein, der die Spannung der von den Photovoltaik-Elementen und/oder den Windkraftanlagen vor der Einspeisung in Gleichspannung umwandelt, falls in dem Stromnetz mit Gleichspannung gearbeitet wird.

Wird in dem Stromnetz mit Wechselspannung gearbeitet, so können ein Wechselrichter und/oder ein Frequenzumwandler vorgesehen sein, um eventuell von den Photovoltaik-Elementen und/oder den Windkraftanlagen erzeugte Energie in Wechselspannung umzuwandeln bzw. die Frequenz einer erzeugten Wechselspannung anzupassen.

Als Fahrzeuge können Straßenbahnen, Elektrobusse, Züge und Ähnliches vorgesehen sein. Auch andere nicht schienengebundene Fahrzeuge mit Stromabnehmer können mit der Erfindung ausgestattet werden.

Es ist auch möglich bestehende Fahrzeuge mit der Erfindung umzurüsten.

Weitere Vorteile und Ausführungsformen der Erfindung zeigen die Unteransprüche, die nachfolgende Beschreibung sowie die Zeichnungen. In den Figuren ist die Erfindung in mehreren Ausführungsbeispielen dargestellt. Es zeigen:
- Fig. 1:: ein erfindungsgemäßes Fahrzeug schematisch in Vorderansicht,
- Fig. 2:: das Fahrzeug aus Fig. 1, ohne Abdeckung in Draufsicht,
- Fig. 3:: das Fahrzeug aus Fig. 2, mit Abdeckung in Draufsicht,
- Fig. 4:: das Fahrzeug aus Fig. 1 bis 3 in Seitenansicht ohne Abdeckung und die Abdeckung in Seitenansicht und Draufsicht,
- Fig. 5:: das Fahrzeug aus Fig. 1 bis 4, mit Abdeckung und Stromabnehmer in Draufsicht,
- Fig. 6:: das Fahrzeug aus Fig. 1 bis 5, mit Abdeckung und Stromabnehmer in Seitenansicht,
- Fig. 7:: das Fahrzeug schematisch mit weiteren Anwendungsgebieten

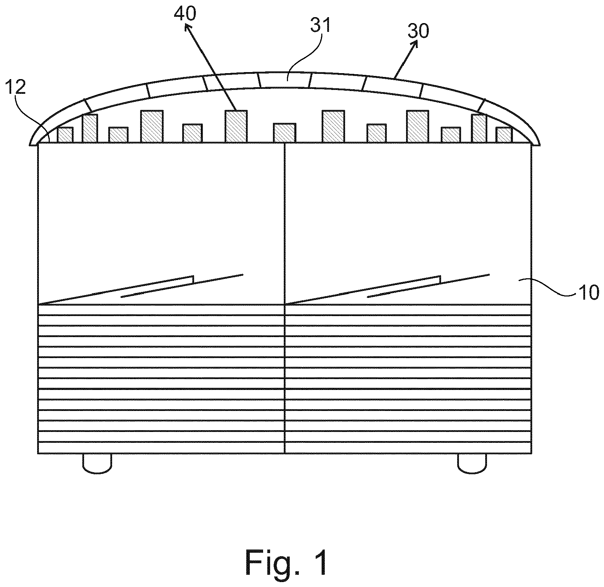

Fig. 1 zeigt schematisch ein erfindungsgemäßes Fahrzeug 10, beispielsweise eine Straßenbahn 13 in Vorderansicht. Es sind auf dem Dach 12 des Fahrzeugs 10 mittelbar oder unmittelbar mehrere Windkraftanlagen 40 angeordnet, die jeweils über eine vertikale Rotationsachse verfügen. Oberhalb der Windkraftanlagen 40 ist eine Abdeckung 31 vorgesehen, auf der Photovoltaik-Elemente 30 angeordnet sind.

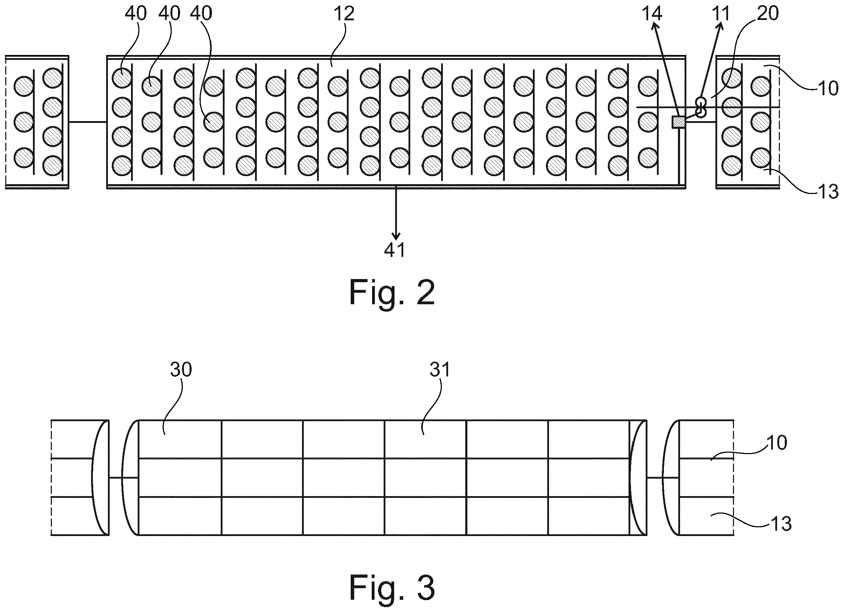

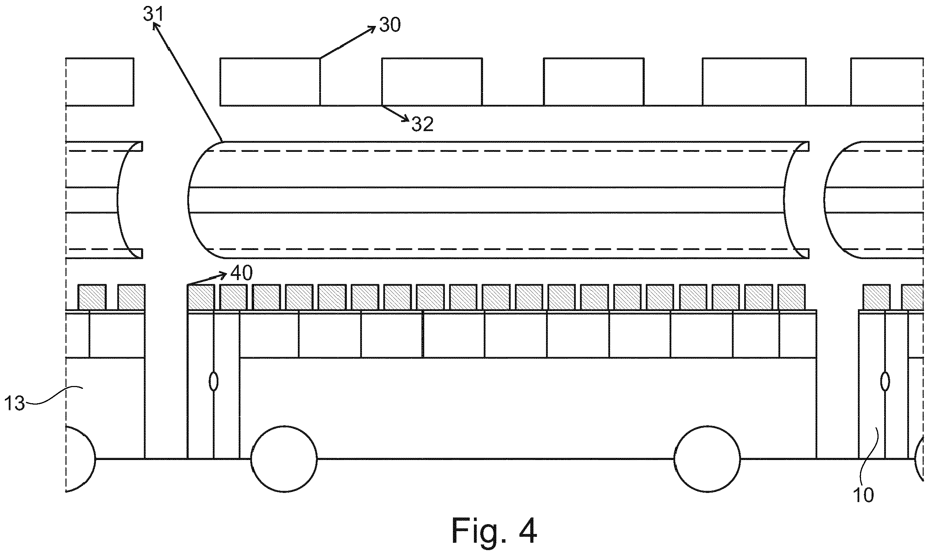

In den Fig. 2 bis 4 wird der Aufbau der Konstruktion auf dem Dach 12 des Fahrzeugs 10 näher ersichtlich. Eine Vielzahl von Windkraftanlagen 40 ist auf dem Dach 12 des Fahrzeugs 10 angeordnet. Die von den Windkraftanlagen 40 erzeugte Energie wird in einem Windhauptleiter 41 zusammengeführt. Dieser Windhauptleiter 41 führt in einen Frequenzwandler 14, der die Frequenz der Spannung an die Frequenz im Stromnetz angleicht. Danach wird die elektrische Energie über den Stromabnehmer 11 dem elektrischen Leiter 20 zugeführt. Die Windkraftanlagen 40 sind bei normalem Betrieb von der Abdeckung 31 überdeckt, die die Photovoltaik-Elemente 30 umfasst. Wie aus Fig. 4 ersichtlich ist, können mehrere Photovoltaik-Elemente 30 mittels Verbindern 32, wie Steckverbindern miteinander verbunden werden. Dies ist in Fig. 4 oben stark schematisch und nicht maßstabsgerecht dargestellt. Die Photovoltaik-Elemente 30 sind auf der Abdeckung 31 angeordnet, die wiederum ihrerseits die Windkraftanlagen 40 abdeckt.

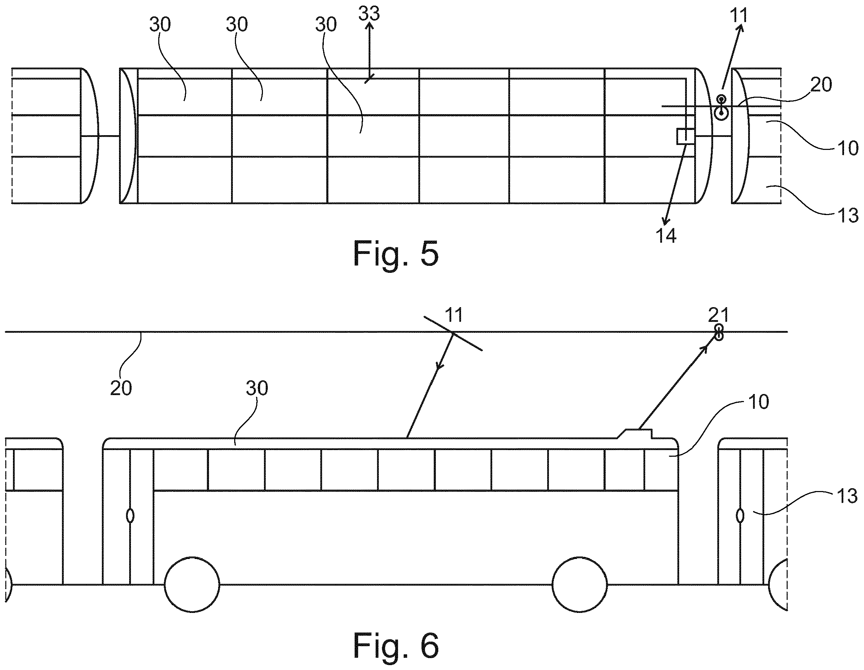

Fig. 5 zeigt eine Darstellung ähnlich Fig. 2, jedoch sind hier die Windkraftanlagen 40 von der Abdeckung 31 und somit von den Photovoltaik-Elementen 30 verdeckt. Die von den Photovoltaik-Elementen 30 erzeugte Energie wird hier über einen Solarhauptleiter 33 in einen Frequenzwandler 14 geführt, um auch hier eine Spannung mit der richtigen Frequenz zu erzeugen, bevor diese mittels des Stromabnehmers 11 in den elektrischen Leiter 20 eingespeist wird.

Fig. 6 zeigt eine Straßenbahn 13, die sowohl über einen Stromabnehmer 11 verfügt, der elektrische Energie zum Betrieb der Straßenbahn 13 aus einem elektrischen Leiter 20 bezieht als auch über ein Strom leitendes Glied 21, über welches die von den Windkraftanlagen 40 und den Photovoltaik-Elementen 30 erzeugte Energie in den elektrischen Leiter 20 eingespeist wird. Es ist natürlich ebenso möglich, über das Strom leitende Glied 21 Energie in ein anderes Stromnetz einzuspeisen.

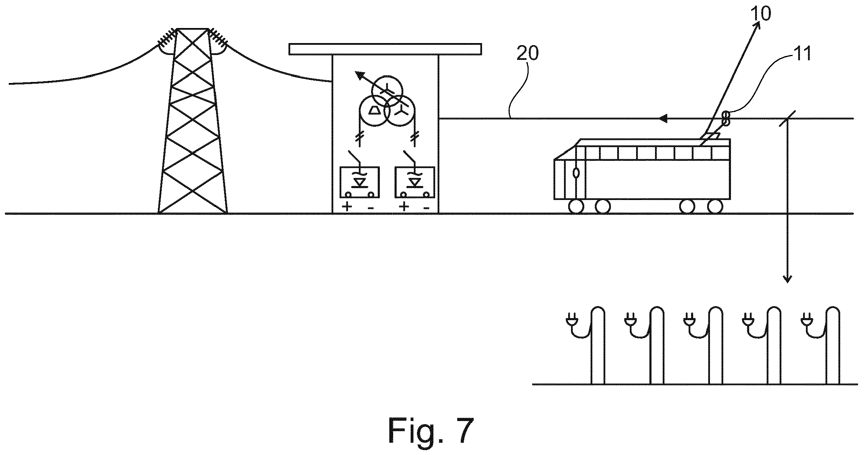

Eine sehr schematische Anwendung ist in Fig. 7 gezeigt. Das Fahrzeug 10 lädt elektrische Energie in den elektrischen Leiter 20. Von dort aus kann die Energie dann beispielsweise zum Betrieb von Ladestationen für E-Bikes oder E-Autos genutzt werden oder einem Umspannwerk zugeführt und dann in das allgemeine Stromnetz eingespeist werden.

Abschließend sei noch darauf hingewiesen, dass die hier dargestellten Ausführungsformen lediglich beispielhafte Ausgestaltungen der Erfindung sind. Diese ist nicht darauf beschränkt. Es sind vielmehr noch Abänderungen und Abwandlungen möglich.

### Bezugszeichenliste:

- 10: Fahrzeug
- 11: Stromabnehmer
- 12: Dach von 10
- 13: Straßenbahn
- 14: Frequenzwandler
- 20: Elektrischer Leiter
- 21: Strom leitendes Glied
- 30: Photovoltaik-Element
- 31: Abdeckung
- 32: Verbinder
- 33: Solarhauptleiter
- 40: Windkraftanlage
- 41: Windhauptleiter

## Patentansprüche

1. Fahrzeug (10) mit wenigstens einem Elektroantrieb und wenigstens einem Stromabnehmer (11) um elektrische Energie von einem elektrischen Leiter (20) abzunehmen,
wobei das Fahrzeug (10) mit einem oder mehreren Photovoltaik-Elementen (30) ausgestattet ist, über die elektrische Energie erzeugbar ist
**dadurch gekennzeichnet,**
**dass** das Fahrzeug (10) weiterhin über wenigstens eine Windkraftanlage (40) verfügt, über die elektrische Energie erzeugbar ist,
**dass** der von den Photovoltaik-Elementen (30) und/oder der Windkraftanlage (40) erzeugte Strom direkt ohne Zwischenspeicherung in ein Stromnetz eingespeist wird
und
**dass** entweder
ein zusätzliches den elektrischen Strom leitendes Glied (21) dazu verwendet wird, die elektrische Energie in das Stromnetz einzuspeisen
oder dass
der Stromabnehmer (11) dazu verwendet wird, die elektrische Energie in den elektrischen Leiter (20) einzuspeisen.

2. Fahrzeug (10) nach Anspruch 1, **dadurch gekennzeichnet, dass** das bzw. die Photovoltaik-Elemente (30) mittelbar oder unmittelbar auf dem Dach (12) des Fahrzeugs (10) angeordnet sind.

3. Fahrzeug (10) nach Anspruch 1 oder 2, **dadurch gekennzeichnet, dass** die wenigstens eine Windkraftanlage (40) mittelbar oder unmittelbar auf dem Dach (12) des Fahrzeugs (10) angeordnet ist.

4. Fahrzeug (10) nach den Ansprüchen 2 und 3, **dadurch gekennzeichnet, dass** das bzw. die Photovoltaik-Elemente (30) eine Abdeckung (31) über dem wenigstens einen Windkraftanlage (40) bilden.

5. Fahrzeug (10) nach einem der Ansprüche 1 bis 4, **dadurch gekennzeichnet, dass** die wenigstens eine Windkraftanlage (40) über eine vertikale Rotationsachse verfügt.

6. Fahrzeug (10) nach einem der Ansprüche 1 bis 4, **dadurch gekennzeichnet, dass** die wenigstens eine Windkraftanlage (40) über eine horizontale Rotationsachse verfügt.

7. Fahrzeug (10) nach einem der Ansprüche 1 bis 6, **dadurch gekennzeichnet, dass** mehrere Windkraftanlagen (40) vorgesehen sind, wobei die von diesen erzeugte Energie in einem Windhauptleiter (41) gesammelt wird.

8. Fahrzeug (10) nach einem der Ansprüche 1 bis 7, **dadurch gekennzeichnet, dass** mehrere Photovoltaik-Elemente (30) vorgesehen sind, die über Verbinder (32), wie Steckverbinder miteinander verbunden sind.

9. Fahrzeug (10) nach einem der Ansprüche 1 bis 8, **dadurch gekennzeichnet, dass** mehrere Photovoltaik-Elemente (30) vorgesehen sind, wobei die von diesen erzeugte Energie in einem Solarhauptleiter (33) gesammelt wird.

10. Fahrzeug (10) nach einem der Ansprüche 1 bis 9, **dadurch gekennzeichnet, dass** die Photovoltaik-Elemente beheizbar sind, insbesondere über eine Rohrbegleitheizung.

11. Fahrzeug (10) nach einem der Ansprüche 1 bis 10, **dadurch gekennzeichnet, dass** als Stromnetz der elektrische Leiter (20) dient.

12. Fahrzeug (10) nach Anspruch 11, **dadurch gekennzeichnet, dass** am Fahrzeug (10) ein Gleichrichter vorgesehen ist, der die Spannung der elektrischen Energie vor der Einspeisung in das Stromnetz in Gleichspannung umwandelt.

13. Fahrzeug (10) nach Anspruch 11, **dadurch gekennzeichnet, dass** am Fahrzeug (10) ein Wechselrichter vorgesehen ist, der die Spannung der elektrischen Energie vor der Einspeisung in das Stromnetz in Wechselspannung umwandelt.

14. Fahrzeug (10) nach Anspruch 13, **dadurch gekennzeichnet, dass** am Fahrzeug (10) ein Frequenzumwandler vorgesehen ist, der die Frequenz der Spannung der elektrischen Energie vor der Einspeisung in das Stromnetz in die Frequenz der Wechselspannung im elektrischen Leiter (20) umwandelt.

15. Fahrzeug (10) nach einem der Ansprüche 1 bis 14, **dadurch gekennzeichnet, dass** das Fahrzeug (10) eine Straßenbahn (13), ein Zug oder ein Elektrobus ist.
